# EUROPEAN PATENT APPLICATION

(11) **EP 3 653 330 A1**
(43) Date of publication of application: **20.05.2020**
(21) Application number: 18205840.4
(22) Date of filing: 13.11.2018
(51) Int. Cl.: B23K 26/10, B23K 26/352

(54) **DEVICE AND METHOD FOR SURFACE TREATMENT INSIDE SMALL FREEFORM CAVITIES AND SMALL FREEFORM GROOVES**

(71) Applicant: Unitechnologies SA, 3238 Gals (CH)
(72) Inventor: Calderon, Ivan, 2014 Bôle (CH)
(74) Representative: AMMANN PATENTANWÄLTE AG

(57) **Abstract**

A device(1) for treating, preferably polishing a surface or creating surface structures by abrasion, comprises a tiny, rod-shaped front part which comprises a part for directing a radiation beam to a micro optics (9, 11), the micro optics for conditioning and bundling the beam, and an end part being substantially a transparent closure of the device or a deflecting means (15). The end part (17) constitutes a mechanical closure so that vapors etc. created during use of the device do not enter the device, and damage of the micro-optics is avoided. The width of the front part optionally circular in cross-section is at most 5 mm, and a preferred length thereof is at least 200 mm, preferably at least 400 mm

## Description

The present invention relates to a device for the treatment of a surface, preferably polishing, inside small freeform cavities and small freeform grooves according to the preamble of claim 1. The present invention relates further to a method using the device for treating a surface of such cavities or grooves.

Generally, polishing is the process of increasing the smoothness of a surface by reducing the surface roughness. Current automated polishing techniques mostly rely on large-area treatments, such as grinding, electro-chemical and radiation methods. When used to process small freeform cavities and small freeform groves, those techniques are disadvantageous in that they often lead to time consuming methods, edge rounding and overhanging surfaces.

On the other hand, state of the art polishing devices and methods do not satisfactory address the specifics of polishing small freedom cavities or small freeform grooves as currently required by the injection moulding industries and tool industries. Furthermore, the state of the art polishing methods do not satisfactory address the specifics when initial surface roughness is relatively high as found in -e.g.- VDI 3400 CH 30 levels (equivalents ISO, ASA, SPI to the VDI are fully considered).

Furthermore, current radiation treatments -e.g. laser radiation- employed to process such surfaces, use standard radiation delivery methods -e.g. focussing devices- which are absolutely not suitable to process cavities or grooves due to inherent and intrinsic limitations -e.g. shadow effects, incidence angles too big, numerical aperture issues, etc.-. Then, an appropriate radiation delivery device shall be provided in order to process the surfaces inside small freeform cavities and small freeform grooves.

Another process characteristics is the processing of parts comprising a surface curvature or other complex surface structures. Those already demand an intricate handling during processing of those parts which is even more challenging when dealing with small freeform cavities and small freeform grooves. Thus, an elaborate automatized manipulation technique must be provided. In the face of those technical difficulties, a small space consumption of such an automatized polishing device is aspired.

In addition, the current radiation processes demand the radiation to be applied perpendicularly to the processed surface, or at least with small deviations regarding the normal direction of the surface, making the access impossible when traditional beam delivery methods and optics are considered.

Due to the above difficulties, polishing of surfaces inside small cavities and small freeform grooves remains mostly an unsolved challenge and is mostly performed manually by very experienced and skilled operators. Nevertheless, an automatized polishing at a faster processing speed and a reproducible production quality would be highly desirable and in some cases of paramount importance.

It is an object of the present invention to avoid at least one of the above mentioned disadvantages and to propose a polishing device and method having the capability to meet the mentioned process requirements, such that homogeneously polished surfaces can be manufactured in a better way.

It is another object to propose a device and method better suited for the polishing of surfaces inside small freeform cavities and surfaces inside small freeform grooves.

It is yet another object to provide such a device and method with a lower space demands and/or a higher processing speed and/or lower manufacturing costs.

Such a device is defined in claim 1. The further claims define preferred embodiments, a method using the device, and preferred execution modes of the method.

As a preferred embodiment, such a polishing apparatus and device comprises:
- a positioning assembly configured to position a surface area (surfaces inside small freeform cavities and surfaces inside small freeform grooves) of a workpiece inside a working space;
- a radiation equipment (e.g. laser) configured to deliver the radiation energy through a delivery channel (e.g. fibre) in order to direct the radiation beam inside the polishing device;
- a polishing device able to receive the radiation, to shape the radiation and to deliver the radiation over a spot area over a surface inside a small freeform cavity and/or inside a small freeform groove;
- a polishing device able to deliver and able to focussing the received radiation with a new pointing direction ranging from 0° to 100° in regard to the initial radiation propagation direction;
- a polishing device and method allowing to reduce the initial surface roughness by radiation re melting of the material surfaces inside small freeform cavities and inside small freeform grooves;
- a control unit configured to operate the incidence position of the radiation beam over the surface area along an incidence trajectory substantially extending over the total surface area; and
- a control unit configured to adjust the radiation level in regard to the actual interaction angle, the actual interaction distance and the actual roughness level.

### Dimensions of Cavities and Grooves

Preferably, cavities dimensions are of diameter 10 mm or less, most preferably 2 mm or less. Preferably, cavities depths are 10 mm or more, most preferable 60 mm or more. If traversing, the total depth is preferably 60 mm or more.

Preferably, grooves widths are of 10 mm or less, most preferable 2 mm or less. Preferably, grooves depth is 10 mm or more, most preferable 60 mm or more. If traversing, the total depth is preferably 60 mm or more. Preferably, groove lengths are 1 mm or more.

Preferably, dimensions within grooves and cavities set forth above are applicable in free combinations.

### Surface Roughness

Preferably the initial surface roughness is of VDI 3400 CH 30 level or less, most preferably VDI 3400 CH 25 or less.

The invention is further explained by way of a preferred embodiment with reference to the Figures:

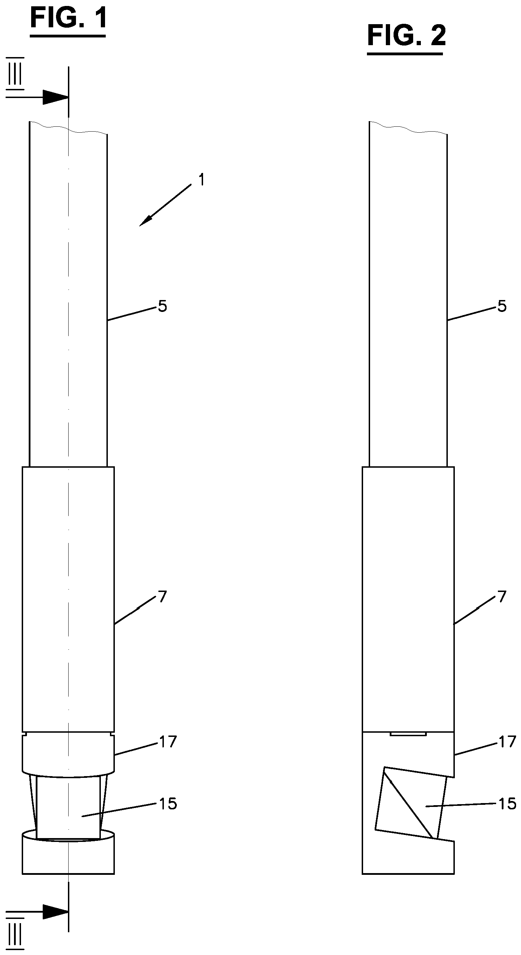

Fig. 1 Front view on a polishing device;
Fig. 2 Side view on a polishing device;
Fig. 3 Section according to III-III in Fig. 1
Fig. 4 Enlargement of the end of the device of Fig. 3 containing the optics

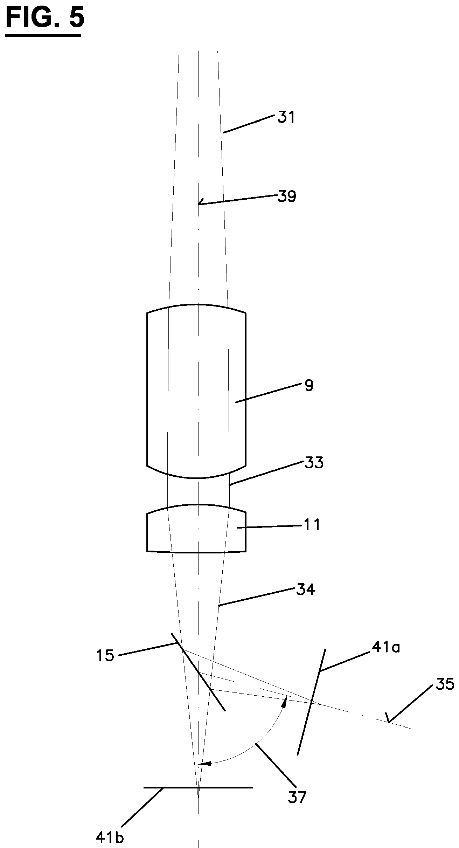

Fig. 5 Radiation path, schematic

The polishing device 1 receives the radiation (e.g. radiation produced by a laser) most preferably through a (glass) fibre 3 guided in a protecting tube 5. Preferred fibre diameters of 1200 µm (µm = micro meter) or less, most preferred of 600 µm or less. The protecting tube 5 preferably consists of metal, more preferably stainless steel.

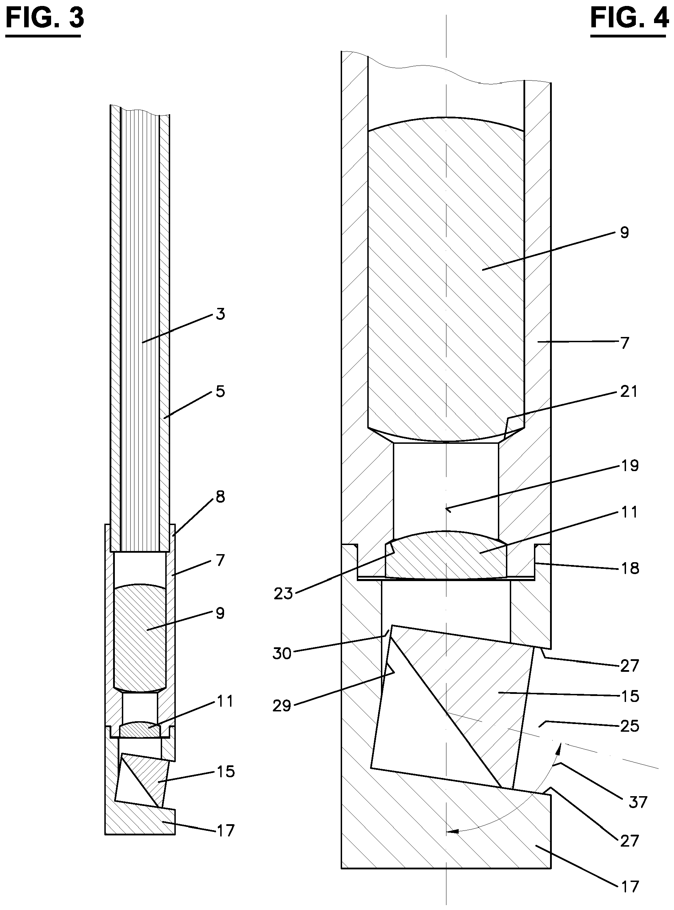

The polishing device comprises a micro optics lenses set (Fig. 4) to first consolidate the radiation beam 31, then the consolidated radiation beam 33 is focussed (focussed beam 34) and is directed following a new pointing direction 35, preferably between (angle 37) 0° to 100° with respect to the initial propagation direction 39, most preferable between 65° to 80° with respect to the initial propagation direction 39. The polishing device 1 is able to change the propagation direction by a set of prism and mirror micro optics. Most preferred is the fact that the set of prism and mirror micro optics can be exchanged to have another propagation direction and / or another pointing direction.

The external diameter of the polishing device 1 is preferably less than 3 mm, most preferably less than 1.5 mm. The polishing device's preferred length is 200 mm or more. The polishing device is able to deliver the radiation, at the focusing plane 41a/b, with a preferred spot diameter of 1200 µm or less, most preferred with a spot diameter of 600 µm or less.

### Preferred micro optics

The micro optics set is integrally mounted inside the polishing device housing 7. The polishing device housing 7 is connected to the fibre 3 by concentric and tubular mechanical sections 5, thus allowing a correct alignment, preferably by a (high precision) press fitting 8, comprising positive/negative cylindrical seat surfaces. Most preferably, the connection is, optionally additionally, glued with a suitable adhesive, e.g. a silicone based adhesive. The polishing device housing 7 is made in such a way that it receives and holds the mechanically manufactured parts and sections to locate each component of the micro optics set. Preferably, the polishing device housing 7 consists of metal, more preferably stainless steel, most preferably the same material as the protecting tube 5.

The polishing device micro optics set includes a group of micro lenses to efficiently deliver the radiation to a focal point. The radiation source (laser; not shown) supplies the radiation that goes through a first collimation optical lens 9 and then through a second focusing optical lens 11. Finally, the beam goes through a mirror prism 15, so that the deflection and focusing of the radiation is achieved. The back side 16 of the prism is provided with a reflective layer or is reflective by it itself so that the radiation is substantially lossless redirected. (In other terms: The radiation enters the prism 15 by one of its smaller faces, is deflected at its larger face 16, and exits the body of prism 16 by the other smaller face.)The mirror prism 15 has its own support 17, thus it can be dismounted from the polishing device housing 7 and / or exchanged with a new prism 15 if required. The connection between polishing device housing 7 and support 17 is preferably a (high precision) cylindrical positive/negative shaped seat 18 as well. The attachment is realized by (high precision) press fitting. A glue may be applied additionally or as an alternative for fastening the support 17 on the lower end of polishing device housing 7.

The first lens 9 is used to reduce the initial radiation beam divergence, thus the radiation beam can propagate almost parallel to the optical direction 19. The second lens 11 is used to perform the radiation focussing at the suitable working distance. Preferably, the first lens 9 is positioned in a tapered seat 21 in the polishing device housing 7 and glued in this position by a glue (not shown), preferably a silicone based glue. For the 2nd lens 11 is provided another tapered seat 23, yet with tapering in the opposite direction. It is preferably fastened by gluing, with a silicone based glue being preferred. Hence, first lens 9 and second lens 11 may be inserted each time from the proximal end of the polishing device housing 7.

The mirror prism 15 is set in the beam exit opening 25 of which the periphery 27 is closely fitted to the outer shape of the mirror prism 15. The mirror prism closes the space toward the micro optics (lenses 11, 19) in the polishing device housing 17, preferably hermetically, against entry of vapors etc resulting from the polishing process. The sealing is obtained by surplus glue or another sealing matter, e.g. on the basis of silicone polymers, covering the gap and slits between the upper face of the prism 15 and the cut in the support 17. The mirror prism 15 abuts the lateral support face 29 in the support 17 resulting from cutting the exit opening 25 in the support 17, so that its position is exactly defined. Preferably, it is fastened in that position by gluing, preferably using a silicone based glue. As mentioned, a gap 30 between the back edge of the prism and the cylindrical inner wall of the axial bore is closed by suitable sealing matter (not shown).

Further, the mirror prism 15 and its support 17 allow precisely adjusting the beam deflection angle 37 to the different requirements and geometrical needs of the working piece and the working surface. The most preferred deflection angle 37 is about 75°. Possible deflection angles range 37 from 0° (no prism, support 17 being essentially a window for the straight focussed beam and mechanically closing the polishing device housing 7 against invasion of matter damaging the optics, or a cylindrical cap with such a window) up to 100° deflection angle.

### Polishing method

An according polishing method of a surface area comprises the steps of:
- directing a radiation beam to an incidence position on said surface area such that the radiation beam comprises a spot area within and on said surface area using the device; and
- providing a relative spatial (translations and rotations) movement of the work piece (surfaces inside small freeform cavities and surfaces inside small freeform grooves) with respect to the radiation beam and with respect to the polishing device along a spatial predetermined incidence trajectory such that:
   a. the incidence position of the radiation beam is subsequently shifted from a previous spot area to a following spot area within said surface area;
   b. the working distance between the polishing device and the surface to be processed remains constant; and
   c. the position of the polishing device is managed in such a way that collisions with the work piece (surfaces inside small freeform cavities and surfaces inside small freeform grooves) are avoided.

An energy density of the radiation beam is provided at the spot area such that irregularities on said surface area are reduced by the impact of the radiation beam. An energy density of the radiation beam is provided at the spot area such that the energy can be delivered either following a defined continuous intensity level or following a level variably modulated in time or a freely established combination of both.

As the radiation (e.g. laser) energy is delivered within a preferred spot diameter of 1200 µm or less, most preferred spot diameter of 600 µm or less on the work piece surface, the surface material melting parameters (e.g. power, speed) follow the today state of the art values as specified in the literature.

The used Laser may provide a power density in the device, in particular in the interior of the front part, of at least 1.3 kW/mm², preferably at least 2.4 kW/mm². (The energy density is determined on a plane orthogonal to propagation direction.) The device needs to be designed to support this power density. Preferably the energy is focused on a spot of 0.6 mm diameter with at least 0.4 kW on this spot, or at least 0.8 kW on a spot of 0.9 mm diameter, the spot having substantially a circular shape.

Further advantageous features and preferred embodiments of the invention are described below and can be correspondingly applied to the device and to the method according to the invention.

### Moved Work Piece / Polishing Device

At least one of the positioning assembly and the polishing device is configured to provide a fully automatized relative spatial movement of the work piece (surfaces inside small freeform cavities and surfaces inside small freeform grooves) with respect to the radiation beam such that the incidence position of the radiation beam is continuously spatially shifted from a previous spot area to a following spot area along the incidence trajectory.

Most preferred, a control unit is configured to automatically control the polishing device to provide a substantially constant energy density of the radiation beam at substantially each spot area such that spatial irregularities on the surface area are reduced by the impact of the radiation beam. The control unit is previously programmed taking into account the whole configuration of the positioning assembly / assemblies features, radiation (e.g. laser) features, polishing device features, surfaces (surfaces inside small freeform cavities and surfaces inside small freeform grooves) features, work piece features and re melting process parameters and features.

Due to the automatically controlled relative spatial movement of the work piece (surfaces inside small freeform cavities and surfaces inside small freeform grooves) with respect to the polishing device under simultaneous automatic control of the constant distance between the device and the surface along each spot area, high precision requirements of the automatically produced polishing can be met.

### Protective Environment

Most preferably, a sealed, flexible and compliant enclosure for the work piece (surfaces inside small freeform cavities and surfaces inside small freeform grooves) is provided, the enclosure comprising an inlet for a protective gas. Preferably, the inner volume of the enclosure is at most 100 dm³ (100 l) more preferred at most 10 dm³. Preferably, the control unit is configured to control the flow of a protection gas through the inlet in such a way that substantially no protective gas is inserted inside the enclosure during said shifting of the incidence position along the incidence trajectory.

The preceding figures, description, comprise numerous features in combination that one skilled in the art may also contemplate separately and use in further appropriate combinations without leaving the scope of protection of the invention which is defined by the attached claims.

Conceivable variants are, f.i.:
- Instead of a prism 15, a mirror is used to deflect the radiation towards the work piece. In order to protect the micro optics inside the housing 7, the opening where the radiation exits needs to be closed by a transparent plate, e.g. a glass disc.
- Instead of support 17 with prism 15, the polishing device may be provided with a flat closure, e.g. a glass (or more general, a transparent) disc. The radiation will exit the device in axial direction, i.e. the initial propagation direction 19, so that the surface in this direction may be treated.
- The connections between tube 5 and polishing device housing 9 may comprise a means securing attachment in a predefined rotational position, e.g. a pair of rib and complementary groove, or a marking.
- For deflecting the radiation in the prism 15, it is relied on (frustrated) internal or total reflexion at a surface where the radiation transits from a denser to a less dens medium, in particular from the material for the prism into air. As a consequence, realizing the back side of the prism as plane of high reflexion force is avoided.
- The tube 5, polishing device housing 7 and/or prism support 17 has another than circular cross-section, e.g. polygonal or otherwise deviating from the most preferred radial cross-section.
- At least one, preferable all, of prism and lenses consist of a highly temperature resistant material, like mineral glasses and in particular silicon dioxide (silica, SiO₂). As the prism is particularly exposed to the conditions caused by the working process, in particular an elevated temperature, it is preferably made of a temperature resistant material, and or more generally a chemically and physically resistant material.

### Glossary

- VDI: Association of German Engineers ("Verein Deutscher Ingenieure")
- VDI 3400 CH xx: A standard defined by the VDI concerning electro erosion. The CH values correspond to surface roughness and are linked to ISO and other standards. Some values and ISO equivalents are:

| **VD 3400 CH** | **ISO, VDI, ASA Ra(=CLA=AA) [µm]** |
|---|---|
| 0 | 0.1 |
| 10 | 0.32 |
| 20 | 1 |
| 25 | 1.8 |
| 30 | 3.2 |
| 40 | 10 |

## Claims

1. A device (1) for the treatment of a surface of a work piece inside small freeform cavities and small freeform grooves, **characterized in that** the device comprises a substantially rod-shaped front part (3, 7, 17) extending in an axial direction over an injection length measured from the distal end (17) provided with an exit (25) for electromagnetic radiation for the surface treatment, the front part having a maximal thickness of 5 mm in a radial direction over the insertion length starting from the distal end in order to be insertable in small freeform cavities and small freeform grooves of a work piece, the interior of the front part being capable to pass electromagnetic radiation toward the distal end and being provided with a micro optics in order to focus the radiation to a working spot (41 a/b), and the distal end being closed by a closure means (15) permissible to the radiation so that the distal end is closed against entry of matter, preferably gaseous matter, into the front part.

2. The device according to claim 1, **characterized in that** a deflecting means, preferably a prism (15) or a mirror, is arranged near the distal end in order to deflect the electromagnetic radiation by a deflection angle (39) significantly greater than 0° towards a radial direction, and the maximum thickness of the front part (3, 7, 17) is determined in a plain defined by the axial direction (39) and the direction of the deflection (35) by the deflecting means.

3. The device of claim 2, **characterized in that** the deflection means is substantially a prism (15), preferably with the face, where radiation is deflected, being provided with a highly reflecting surface towards the impinging radiation in order to reduce loss of radiation energy by deflection, and the deflection angle (39) is maximally 100° with respect to the axial direction (19), the prism substantially constituting the closure means by one of its faces, preferably one of its smaller faces, and being arranged that the radiation enters and exits the prism by its smaller faces, the deflection occurring at a larger face (16) of the prism.

4. The device (1) of claim 2, **characterized in that** the prism (15) is held in a support piece (17) which is detachably attached to the remainder of front part to constitute its distal end, so that the prism may be exchanged in detaching the support piece (17).

5. The device (1) according to one of the preceding claims, **characterized in that** the insertion length is at least 200 mm, preferably at least 400 mm.

6. The device (1) according to one of the preceding claims, **characterized in that** the cross-section of the front part is substantially circular.

7. The device (1) according to one of the preceding claims, **characterized in that** the maximal thickness is at most 3 mm, preferably at most 1.5 mm.

8. The device (1) according to one of the preceding claims, **characterized in that** the radiation deflection angle (39) is in the range 5° to 85 °, preferably 65° to 80° and is more preferably about 75°.

9. The device (1) according to one of the preceding claims, **characterized in that** the micro optics comprises a 2nd lens (11) of positive refractive power, the 2nd lens being arranged in the front part in order to create a focussed beam (34) exiting the front part.

10. The device (1) according to one of the preceding claims, **characterized in that** upstream the 2nd lens with respect to propagation of the radiation, the micro optics comprises a 1st lens arrangement being a collimator, preferably a single lens (17), arranged to reduce the divergence of the radiation (31) entering the front part, preferably to produce a beam (33) of substantially parallel rays.

11. The device (1) according to one of claims 3 to 10, **characterized in that** the device is designed for a power density of the radiation of at least 1.3 kW/mm², preferably at least 2.4 kW/mm²..

12. The device (1) according to one of the preceding claims, **characterized in that** it is arranged for the radiation being light, preferably laser light, and more preferably infrared laser light.

13. Use of the device (1) according to one of the preceding claims for modifying the topography of a surface inside small freeform cavities and small freeform grooves of a work piece, preferably for at least one of: providing the surface with predefined structures; and polishing the surface.

14. Use of the device (1) according to one of the preceding claims for modifying the topography of a surface inside small freeform cavities and small freeform grooves, **characterized in that** the device is held in a distance from the surface and the radiation beam exiting the device is conditioned such that on the surface a radiation spot is created complying with at least one of:
- the spot has a diameter of at most 1.2 mm, preferably at most 0.6 mm;
- the spot has a diameter of about 0.6 mm and an energy of about 0.4 kW is supplied to the spot; or the spot has a diameter of about 0.9 mm and an energy of about 0.8 kW is supplied to the spot.

15. A surface treatment apparatus including the device according to claims 1 to 12, **characterized in that** it further comprises at least one of, preferably all of:
- a positioning assembly configured to position a surface area (surfaces inside small freeform cavities and surfaces inside small freeform grooves) of a workpiece inside a working space;
- a radiation equipment (e.g. laser) configured to deliver the radiation energy through a delivery channel (e.g. fibre) in order to direct the radiation beam inside the polishing device, preferably a radiation equipment providing at least 1.3 kW/mm², preferably at least 2.4 kW/mm² in the interior of the front part;
- a control unit configured to operate the incidence position of the radiation beam over the surface area along an incidence trajectory substantially extending over the total surface area;
- a control unit configured to adjust the radiation level in regard to the actual interaction angle, the actual interaction distance and the actual roughness level; and
- a sealed, flexible and compliant enclosure for the work piece, preferably comprising an inlet for a protective gas.
